# EUROPEAN PATENT SPECIFICATION

(11) **EP 4 245 488 B1**
(45) Date of publication and mention of the grant of the patent: **28.01.2026**
(21) Application number: 23159407.8
(22) Date of filing: 01.03.2023
(51) Int. Cl.: B25B 1/10, B25B 1/12, B25B 1/24, B25B 5/10, B23D 47/04, B27B 27/08, B27B 27/10, B25B 5/00

(54) **POWER TOOL WITH A WORKPIECE CLAMP ASSEMBLY**
ELEKTROWERKZEUG MIT WERKSTÜCKKLEMMVORRICHTUNG
OUTIL ÉLECTRIQUE AVEC ENSEMBLE DE SERRAGE DE PIÈCE

(30) Priority: 15.03.2022 IN 202211014055
(43) Date of publication of application: 20.09.2023
(73) Proprietor: Black & Decker, Inc., New Britain, CT 06053 (US)
(72) Inventor: PATEL, Swapnil Ashok, Sangli, Maharashtra 416416 (IN); PATIL, Sarang Dividas, Jalgaon, Maharashtra 425111 (IN)
(74) Representative: SBD IPAdmin

(56) References cited:
- EP-A1- 2 985 101
- US-A- 1 810 995
- US-A- 2 675 839
- US-A- 3 406 958
- US-A- 5 483 858
- US-A1- 2021 245 314
- US-B1- 6 422 115

## Description

### Background

### Field

The present disclosure relates to a power tool assembly, power tool base and workpiece clamp assembly therefor. In particular, the present disclosure relates to a chop saw assembly, a chop saw base and workpiece clamp assembly therefor.

### Description of Related Art

Some power tools such as a chop saw are often used to cut a workpiece on a worksite. It is usual to adequately secure the workpiece before operation of the chop saw to ensure safe working.

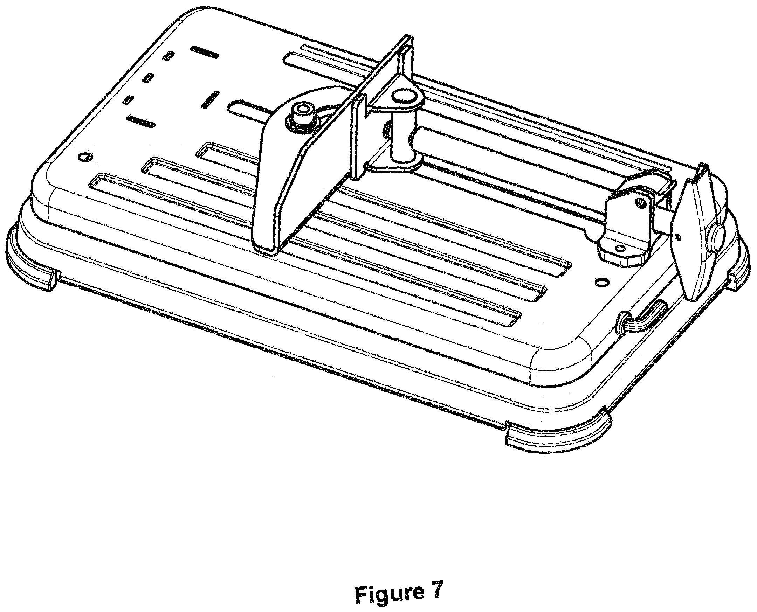

One known base for a chop saw is shown in Figure 7. The base comprises an adjustable clamp which is mounted to the base via a fixed quick release mechanism. The quick release mechanism engages with a threaded rod. A problem with this arrangement is that the threaded rod must project out from the base when clamping large work pieces. This can be inconvenient for the user when moving round the workpiece and the chop saw base.

It is also known to secure a workpiece using a chop saw having a base comprising a different type of clamp e.g. as shown in EP 2 985 101.

EP 2 985 101 shows the base having a work surface and an adjustable clamp having a frame which is releasably attached to the work surface in a number of different positions. This means that the adjustable clamp can be positioned to accommodate different sized work pieces.

A problem with EP 2 985 101 is that the frame attaches to a plurality of slots in the base via a plurality of elongate hooks. The slots and hooks require careful alignment before the frame is securely attached to the base. Furthermore, the frame is only securely fixed to the base when the clamp is actively clamping the workpiece against a fence. This means that the user may not securely fix the clamp in place or the frame can accidently fall out of the base.

EP2985101 forms the closest piece of prior art to the claimed invention and comprises all of the features in the pre-characterising portion of claim 1.

US2675839 discloses a straight beam adjustable C type clamp where the position of the jaw in relation to the retention holder can easily be adjusted.

### Summary

Examples of the present disclosure aim to address the aforementioned problems.

According to the invention, there is provided a power tool assembly comprising a base having a work surface, the work surface configured to receive a workpiece;a power tool mounted on the base;a fence mounted to the work surface; anda workpiece clamp assembly moveably mountable on the work surface, the workpiece clamp assembly having:a moveable clamp mount configured to fix the workpiece clamp assembly in a plurality of different positions on the work surface;a clamp arm, the clamp arm operatively engageable with the moveable clampmount and configured to move in a direction towards the fence;wherein at least one locking pin is moveable between a first position and a second position with respect to the moveable clamp mount wherein in the first position the at least one locking pin is configured to fix the workpiece clamp assembly to the base and in the second position the at least one locking pin is configured to release the workpiece clamp assembly from the base;wherein the work surface comprises a plurality of reciprocal holes configured to receive the at least one locking pin when in the first position; andwherein the at least one locking pin is biased to the first position, and preferably the at least one locking pin is spring biased to the first position.

Optionally, the moveable clamp mount is slidably engageable with an elongate slot in the base.

Optionally, the moveable clamp mount comprises a body portion and a slot guide wherein the body portion is mounted on the work surface and the slot guide is configured to project through the slot. Optionally, the slot guide comprises a guide shoulder portion facing an underside surface of the base opposite to the work surface and configured to prevent the slot guide from being removed from the slot.

Optionally, the at least one locking pin comprises a first locking pin on a first side of the moveable clamp mount and a second locking pin on a second side of the moveable clamp mount.

Optionally, the first locking pin is mounted on a first side of the clamp arm and the second locking pin is mounted on a second side of the clamp arm.

Optionally, the at least one locking pin is coupled to a user actuated handle.

Optionally, the at least one locking pin is configured to move in a different direction to the direction of movement of the clamp arm.

Optionally, the at least one locking is configured to move in a direction substantially perpendicular to the direction of movement of the clamp arm.

Optionally, the clamp arm comprises a threaded portion engageable with a reciprocal threaded bore in the moveable clamp mount.

Optionally, the clamp arm comprises a clamping plate configured to clamp against the workpiece.

Optionally, the clamping plate is pivotally coupled to the clamp arm.

Optionally, the power tool is a chop saw.

Optionally, the power tool is pivotally mounted to the power tool base.

Optionally, the power tool is a chop saw.

### Brief Description of the Drawings

Various other aspects and further examples are also described in the following detailed description and in the attached claims with reference to the accompanying drawings, in which:
Figure 1 shows a perspective view of a power tool base according to an example;
Figure 2 shows a perspective view of part of a workpiece clamp assembly according to an example;
Figures 3a and 3b shows a cross-sectional front view of part of a power tool base according to an example;
Figure 4 shows a cross-sectional side view of part of a workpiece clamp assembly according to an example;
Figure 5 shows a perspective view of a workpiece clamp assembly according to an example;
Figure 6 shows a side view of a power tool base with workpiece clamping according to an example;
Figure 7 shows a prior art view of a power tool base.

### Detailed Description

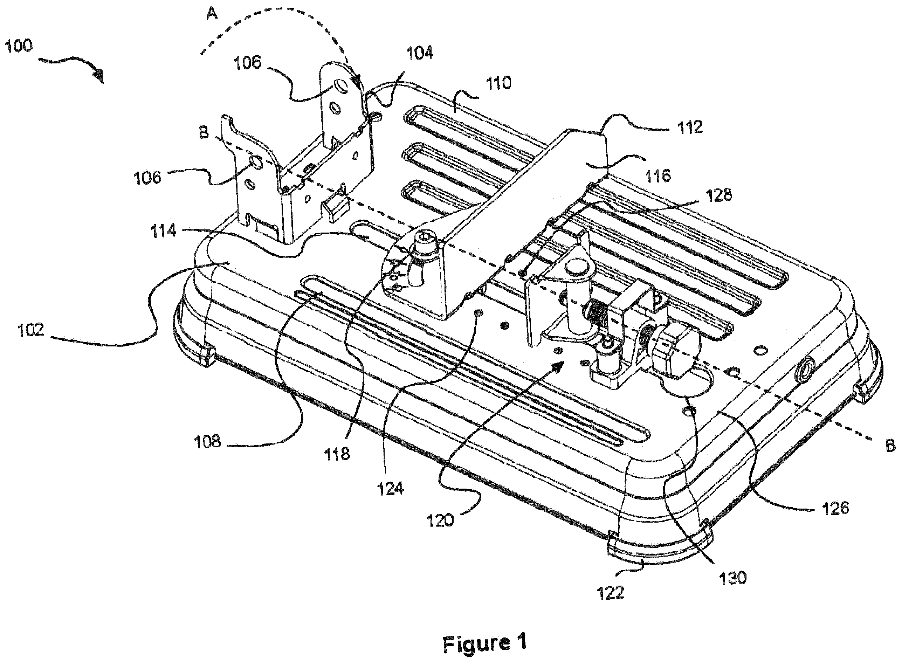

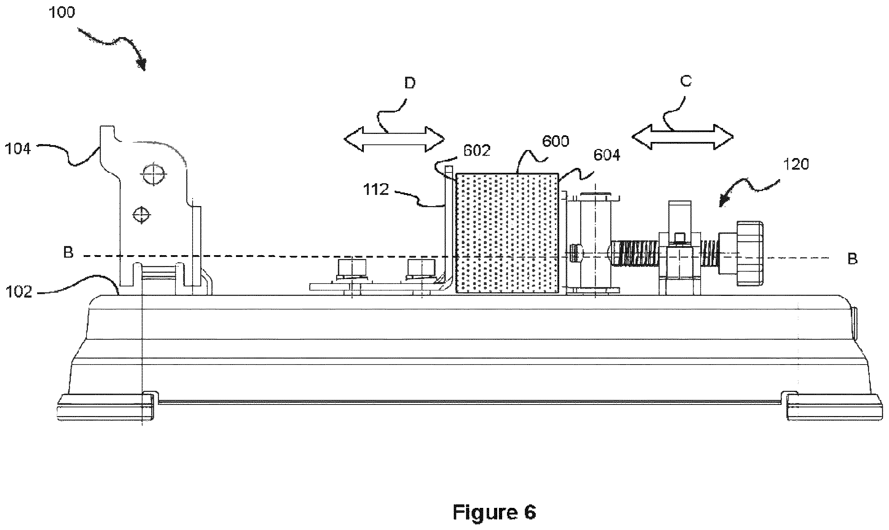

Figure 1 shows a perspective view of a power tool base 100. The power tool base 100 comprises a work surface 102 for receiving a workpiece 600 (best shown in Figure 6). The work surface 102 comprises a flat or substantially flat surface to receive the workpiece 600. The flat surface of the work surface 102 allows the workpiece 600 to rest stably on the work surface 102. The work surface 102 is a top surface 110 of the power tool base 100.

The power tool base 100 comprises a power tool mounting 104. The power tool mounting 104 is configured to engage with a power tool (not shown) such that the power tool is coupled to the power tool base 100. As shown in Figure 1, the power tool mounting 104 comprises pivot holes 106 configured to receive a pivot rod (not shown). The power tool is then pivotally coupled to the power tool base 100 via the pivot rod and the pivot holes 106. This means that the power tool, when mounted to the power tool base 100, is configured to pivot with respect to the power tool base 100. A dotted arrow A is shown in Figure 1 representing an example of the pivotal movement of the power tool about the pivot holes 106 when pivotally coupled to the power tool base 100.

In some examples, the power tool is a chop saw (not shown). In this way, when the chop saw is pivotally mounted to the power tool mounting 104, the chop saw is permitted to pivot between a non-cutting position and a cutting position. Whilst the term power tool will be used below, the power tool pivotally mountable to the power tool base 100 as shown in the Figures is a chop saw.

The power tool and the power tool base 100 will be referred collectively as a power tool assembly. For the purposes of clarity, the power tool has not been shown in the Figures.

However, in some other examples, other power tools can be mounted to the power tool base 100. For example a plunge saw, a drill, an oscillating tool or any other suitable power tool can be mounted to the power tool base 100. In this case, the power tool mounting 104 can be replaced with another suitable power tool mounting 104 configured to couple to e.g. the drill. In this case, the power tool can be slidably moveable with respect to the power tool base 100 rather than pivotally moveable as shown in Figure 1.

The work surface 102 of the power tool base 100 comprises a cutting tool slot 108 for receiving a blade (not shown) of the power tool when the power tool is lowered towards the power tool base 100 during operation. In this way, the blade e.g. a rotating circular saw blade of a chop saw projects through the cutting tool hole 108 when the power tool has been lowered. This means that the blade does not engage the power tool base 100 during operation. The cutting tool hole 108 is elongate along the length of the power tool base 100 as shown in Figure 1. The cutting tool hole 108 extends in a direction parallel with a longitudinal axis B-B of power tool base 100. However, in other examples, the cutting tool hole 108 can be shaped differently to accommodate different types and shapes of cutting tool.

A fence 112 is mountable to the power tool base 100. The fence 112 is mounted in an mounting slot 114. The mounting slot 114 extends in a direction parallel with the longitudinal axis B-B of power tool base 100. The longitudinal axis B-B as shown in Figure 1 is also colinear with the axis of the mounting slot 114. The mounting slot 114 is also parallel with the cutting tool hole 108. The fence 112 comprises a fence workpiece surface 116 configured to engage a first workpiece surface 602 of the workpiece 600 (best shown in Figure 6).

In some examples, the fence 112 is moveable in order to accommodate different shapes and sizes of the workpiece 600. Alternatively or additionally, moving the fence 112 with respect to the power tool base 100 allows the power tool e.g. the chop saw to make angled cuts in the workpiece 600. In some examples, the fence 112 is moveable along the length of the mounting slot 114. Additionally or alternatively, the fence 112 is rotatable with respect to the work surface 102. This means that the workpiece 600 can be orientated so that the workpiece 600 is not perpendicular to the cutting tool hole 108.

By way of example, reference is made to Figure 6 which shows an exemplary workpiece 600 with a rectangular cross section clamped in a position such that the workpiece 600 is perpendicular to the cutting tool hole 108. The workpiece 600 as shown in Figure 6 may be, for example, a portion of 2" x 4" (38mm x 89mm).

The fence 112 is clamped in position with respect to the work surface 102 via a clamping bolt 118 e.g. M10 bolt or alternatively a nut.

The power tool base 100 optionally comprises rubber feet 122 mounted at each corner of the power tool base 100 in order to keep the power tool base 100 stable during operation of the power tool.

The power tool base 100 comprises a workpiece clamp assembly 120 configured to clamp and hold the workpiece 600 against the fence workpiece surface 116 of the fence 112. The workpiece clamp assembly 120 will now be discussed in more detail below.

Figure 6 shows a side view of the power tool base 100 according to an example. The workpiece clamp assembly 120 and the fence 112 are moveably mounted to the work surface 102. As shown in Figure 6, both the workpiece clamp assembly 120 and the fence 112 are configured to move along the axis B-B of the mounting slot 114. The workpiece clamp assembly 120 is configured to be moveable with respect to the work surface 102 towards and away from the fence 112 as indicated by double ended arrow C.

In some examples fence 112 is also configured to be moveable with respect to the work surface 102 towards and away from the workpiece clamp assembly 120 as indicated by double ended arrow D.

In other examples, the fence 112 can be fixed in position with respect to the work surface 102.

In this example, only the workpiece clamp assembly 120 is moveable with respect to the work surface 102. In more preferable examples both the fence 112 and the workpiece clamp assembly 120 are both configured to move with respect to the work surface 102. This provides increased flexibility for clamping different sized and shaped workpieces 600.

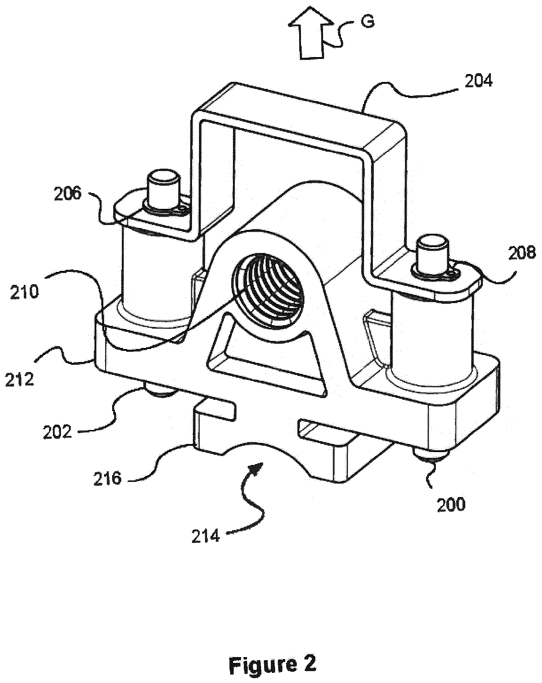

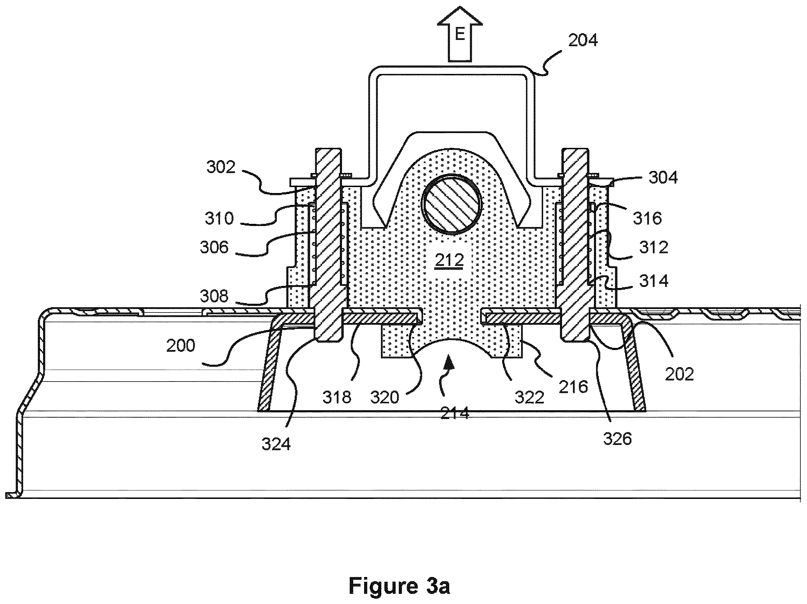

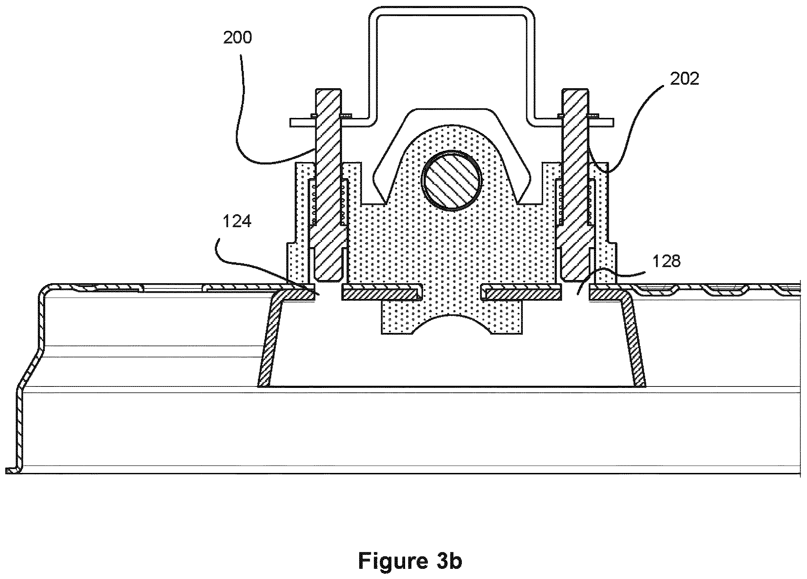

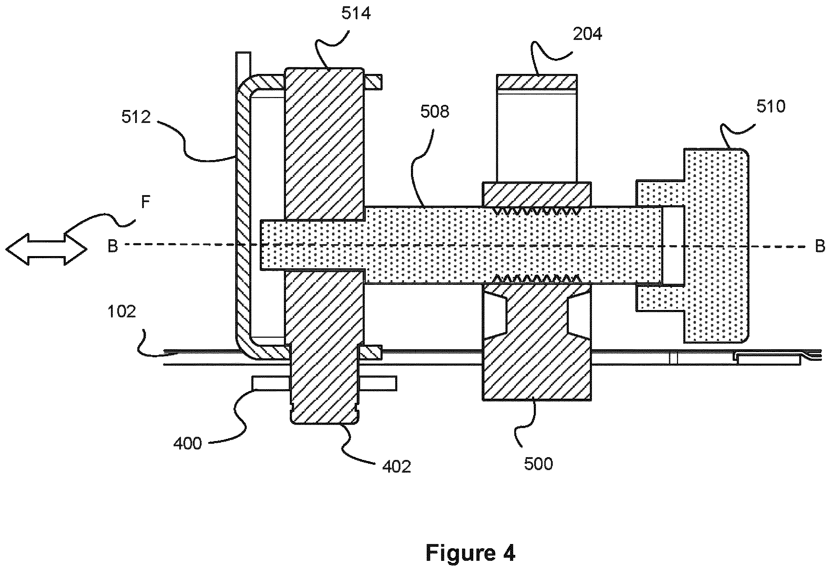

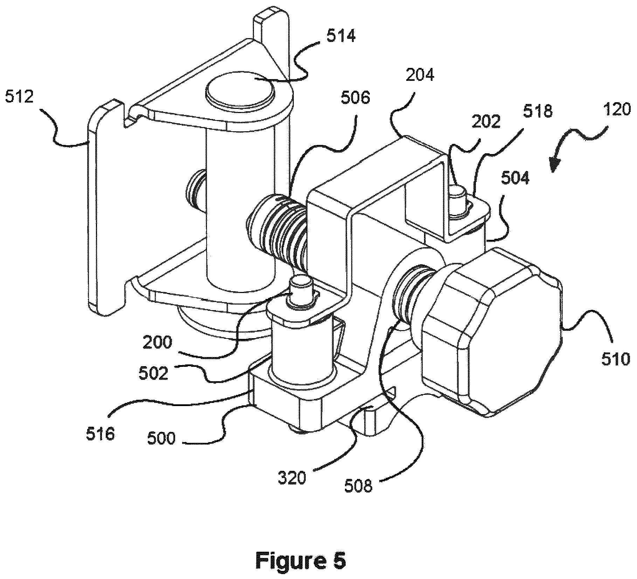

The workpiece clamp assembly 120 will now be described in more detail with respect to Figures 1, 2, 3a, 3b, 4 and 5. Figure 2 shows a perspective view of part of the workpiece clamp assembly 120. Figures 3a and 3b show a cross-sectional front view of part of the power tool base 100 including the workpiece clamp assembly 120 with the workpiece clamp assembly 120 in different modes of operation. Figure 4 shows a cross-sectional side view of part of the workpiece clamp assembly 120. Figure 5 shows a perspective view of the workpiece clamp assembly 120.

The workpiece clamp assembly 120 is configured to move between a plurality of different positions on the work surface 102. Each of the plurality of different positions is predetermined by a series of locator holes 124, 128 in the work surface 102. A first locator hole 124 is configured to receive a first locking pin 200 (as shown in Figure 2) of a first locking mechanism 502. The first locator hole 124 in some examples is mounted on a left side e.g. a left side locator hole 124. The first locking pin 200 will be described in more detail below. The first locking pin 200 in some examples is mounting on a left side e.g. a left side locking pin 124.

For the purposes of clarity, only some of the locator holes 124, 128 are labelled in Figure 1. The locator holes 124, 128 provide a plurality of discrete workpiece clamp assembly 120 locations on the work surface 102. The locator holes 124, 128 are positioned one either side of the mounting slot 114 e.g. on a left side and a right side of the mounting slot 114. In this way, the operator can move the workpiece clamp assembly 120 stepwise from a peripheral position adjacent to an edge 126 of the power tool base 100 to a position adjacent the fence 112.

The locator holes 124, 128 as shown in Figure 1 and Figures 3a, 3b are open holes and the first locking pin 200 and the second locking pin 202 are configured to protrude therethrough. In other examples, the locator holes 124, 128 can be blind holes (not shown) and the first locking pin 200 and the second locking pin 202 do not protrude through to the underside of the power tool base 100.

The workpiece clamp assembly 120 is shown in isolation in Figure 5. The workpiece clamp assembly 120 comprises a moveable clamp mount 500. The moveable clamp mount 500 is configured to fix the workpiece clamp assembly 120 in a plurality of different securing positions on the work surface 102. The moveable clamp mount 500 comprises a first locking mechanism 502 and a second locking mechanism 504. In some examples, the first locking mechanism 502 and the second locking mechanism 504 as respectively mounted on a left side and a right side of the workpiece clamp assembly 120 e.g. a left side locking mechanism 502 and a right side locking mechanism 504. The first and second locking mechanisms 502, 504 are configured to secure the workpiece clamp assembly 120 to the work surface 102.

The first locking mechanism 502 comprises a first locking pin 200. The first locking pin 200 is moveable between a first position and a second position with respect to the moveable clamp mount 500. In some examples, the first position is an "up" position and the second position is a "down" position. In other examples the first and second positions can be orientated in any direction with respect to each other. When the first locking pin 200 is in the first position, the first locking pin 200 is configured to engage with the first locator hole 124. Since the first locking pin 200 projects through the first locator hole 124 in the work surface 102, the first locking pin 200 fixes the workpiece clamp assembly 120 to the power tool base 100. Figure 3a shows the workpiece clamping assembly 120 and the first locking pin 200 in the first position whereby the first locking pin 200 has been lowered through the first locator hole 124. Figure 4 also shows the workpiece clamping assembly 120 in the same fixed arrangement as shown in Figure 3a, however, the cross-sectional view in Figure 4 does not show the first locking pin 200 for the purposes of clarity.

When the first locking pin 200 is in the second position or "down" position, the first locking pin 200 is configured to disengage with the first locator hole 124. Since the first locking pin 200 no longer projects through the first locator hole 124, the first locking pin 200 releases the workpiece clamp assembly 120 from the power tool base 100. Figures 3b shows the first locking pin 200 in the second position whereby the first locking pin 200 has been raised above the first locator hole 124 and free from the work surface 102.

In some examples, the first locking pin 200 is configured to move from the first position to the second position in a direction substantially perpendicular from the longitudinal axis B-B of the power tool base 100. As shown in Figure 3a this means that the user lifts the handle 204 up away from the work surface 102 as indicated by arrow E.

In some examples, the first locking mechanism 502 comprises a first biasing element 306 configured to urge the first locking pin 200 towards the first position. In some examples, the first biasing element 306 is a first compression spring 306 mounted on the first locking pin 200. The first compression spring 306 engages a first pin shoulder portion 308 at a first end of the first compression spring 306. The first compression spring 306 also engages a first inner mount surface 310 at a second end of the first compression spring 306. When the first locking pin 200 is moved into the second position as shown in Figure 3b, the first compression spring 306 compresses and urges the first locking pin 200 back into the first position. Whilst Figures 3a and 3b show the first biasing element 306 is a first compression spring 306, any suitable biasing means or mechanisms can be used e.g. a leaf spring, a tension spring, a resilient rubber pad etc.

In some less preferred examples, the first locking mechanism 502 does not comprise a first biasing element 306. Instead the first locking pin 200 is biased to the first locking position under the force of gravity alone.

In some examples the workpiece clamp assembly 120 optionally comprises a single locking mechanism e.g. the first locking mechanism 502 as shown in Figure 5. In this case, only a first set of locator holes 124 are provided on one side of the mounting slot 114. The first locking pin 200 as shown in Figures 2 and 5 is optionally cylindrical and the first locking pin 200 is configured to engage a circular locator hole 124.

However, in some alternative examples, the first locking pin 200 comprises a different cross-sectional shape e.g. square, rectangular, triangular, hexagonal, star shaped or any other suitable cross sectional shape. If the cross sectional shape of the first locking pin 200 is not circular the workpiece clamp assembly 120 is prevented from rotating with respect to the work surface 102.

In more preferred examples and shown in Figures 1, 2, 3a, 3b, 4 and 5, the workpiece clamp assembly 120 optionally comprises a second locking mechanism 504 e.g. as best shown in Figure 5. The second locking mechanism 504 comprises a second locking pin 202 which is configured to engage with a second locator hole 128. In some examples, the second locking mechanism 504 and the second locking pin 202 are mounted on a right side of the mounting slot 114, e.g. a right side locking mechanism 504, a right side locking pin 202. The same way, the second locator hole 128 is mounted on the right side of the mounting slot 114 e.g. a right side locator hole 128. The second locking mechanism 504 is configured to function in the same way as described with respect to the first locking mechanism 502. By having a first locking pin 200 and a second locking pin 202 respectively engaging the first locator hole 124 and the second locator hole 128, the workpiece clamp assembly 120 is prevented from rotating with respect to the work surface 102. Furthermore, the workpiece clamp assembly 120 is better secured to the work surface 102.

Similar to the first locking pin 200, the second locking pin 202 is also biased to the first position. In this way the second locking mechanism 504 comprises a second biasing element 312 configured to urge the second locking pin 202 towards the first position. In some examples, the second biasing element 312 is a second compression spring 312 mounted on the second locking pin 202. The second compression spring 312 engages a second pin shoulder portion 314 at a first end of the second compression spring 312. The second compression spring 312 also engages a second inner mount surface 316 at a second end of the second compression spring 312.

The first locking mechanism 502 and the second locking mechanism 504 are configured to be operated in unison. Accordingly, when the first locking pin 200 is moved from the first position to the second position, so does the second locking pin 202 move from the first position to the second position.

The first locking pin 200 and the second locking pin 202 are connected together by a handle 204. The first locking pin 200 and the second locking pin 202 project through respective handle holes 302, 304 (as shown in Figure 3a). The first locking pin 200 and the second locking pin 202 are secured to the handle 204 via C clips 206, 208. The handle 204 comprises an upwardly projecting U-shape so that a user can grip and pull the handle 204 away from the power tool base 100. In other words the user pulls the handle 204 upwardly as shown by arrow G as shown in Figure 2.

The first locking pin 200 is on a first side 516 of the moveable clamp mount 500 and the second locking pin 202 is mounted on a second side 518 of the moveable clamp mount 500. The first locking pin 200 is mounted on a first side of a clamp rod assembly 506 and the second locking pin 202 is mounted on a second side of the clamp rod assembly 506.

The clamp rod assembly 506 is shown in more detail in Figure 5. The workpiece clamp assembly 120 comprises the clamp rod assembly 506. The clamp rod assembly 506 is operatively engageable with the moveable clamp mount 500. The clamp rod assembly 506 comprises a threaded rod 508 which is threaded into a threaded bore 210 of the moveable clamp mount 500. The clamp rod assembly 506 can comprise a threaded rod 508 which is threaded along the entirety of its length as shown in Figure 5 or alternatively which is threaded along only a portion of its length as shown in Figure 4.

The clamp rod assembly 506 is moved with respect to the moveable clamp mount 500 by rotating the threaded rod 508 in the threaded bore 210. In some examples, the user can optionally rotate the threaded rod 508 by twisting the knob 510. Instead any suitable device or means can be used to rotate the threaded rod 508 as required.

The clamp rod assembly 506 comprises a clamping plate 512 configured to clamp against a second workpiece surface 604 of the workpiece 600. When the threaded rod 508 rotates with respect to the threaded bore 210, the clamping plate 512 is configured to move in a direction towards or away from the fence 112 as indicated by doubled ended arrow F in Figure 4. The clamping plate 512 is pivotally mounted on a pivot rod 514 and the pivot rod 514 is fixed to the threaded rod 508. This means that the clamping plate 512 can be angled with respect to the longitudinal axis B-B of the power tool base 100 e.g. when the fence 112 has also been angled or the workpiece 600 comprises an angled surface.

Turning back to Figures 1 and 2, the movement of the workpiece clamp assembly 120 with respect to the work surface 102 will be discussed in more detail. The moveable clamp mount 500 comprises a body portion 212 and a slot guide 214.

The body portion 212 can comprise a lattice structure as shown in Figure 2. Alternatively the body portion 212 can comprise a solid structure as shown in Figures 3a and 3b.

When the workpiece clamp assembly 120 is mounted on the power tool base 100, the body portion 212 is mounted adjacent to the work surface 102 and the slot guide 214 is configured to project through the mounting slot 114. The slot guide 214 comprises a guide shoulder portion 216 projecting laterally under the mounting slot 114. The guide shoulder portion 216 faces an underside surface 318 of the power tool base 100 opposite the work surface 102.

The guide shoulder portion 216 laterally projects under the body portion 212 and defines a first retaining slot 320 and a second retaining slot 322. The first retaining slot 320 and the second retaining slot 322 are configured to receive a portion of the power tool base 100 which adjacent to the mounting slot 114. The slot guide 214 and the guide shoulder portion 216 are configured to prevent the slot guide 214 and the workpiece clamp assembly 120 from being removed from the mounting slot 114. In particular, the slot guide 214 and the guide shoulder portion 216 are configured to prevent movement in an upwards direction away from the work surface 102 (e.g. direction E shown in Figure 3a).

This means that the moveable clamp mount 500 is slidably engageable with the work surface 102. That is, when the first and second locking pins 200, 202 are in the second position, the user can slide the workpiece clamp assembly 120 along the mounting slot 114. When the workpiece clamp assembly 120 is located above new locator holes 124, 128, the first and second locking pins 200, 202 are urged into the locator holes 124, 128. This means that the workpiece clamp assembly 120 is automatically locked in position on the power tool base 100. Optionally the first and second locking pins 202, 204 comprise chamfered surfaces 324, 326 to help the first and second locking pins 200, 202 enter and exit the locator holes 124, 128.

The mounting slot 114 comprises a larger opening 130 at one end of the mounting slot 114 as shown in Figure 1. The opening 130 is configured to receive the slot guide 214 into the mounting slot 114. In this way, the user inserts the slot guide 214 into the opening 130 when assembling the workpiece clamp assembly 120 and the power tool base 100.

As shown in Figure 4, in some examples the pivot rod 514 optionally comprises a retaining plate 400 coupled to a portion 402 of the pivot rod 514 which projects below the work surface 102. Similar to the guide shoulder portion 216, the retaining plate 400 prevents the pivot rod 514 and the clamping plate 512 from being lifted upwards away from the power tool base 100 and out of the mounting slot 114. Similarly, the user inserts the retaining plate 400 into the opening 130 when assembling the workpiece clamp assembly 120 and the power tool base 100.

In contrast to the known power tool base as shown in Figure 7, advantageously, the first and second locking mechanisms 502, 504 operate independently from the clamp rod assembly 506. This means that the workpiece clamp assembly 120 is easier to release from the power tool base 100. In addition the first and second locking mechanisms 502, 504 are more reliable. Since the workpiece clamp assembly 120 is not permanently fixed on the power tool base 100, the workpiece clamp assembly 120 can be more compact when compared to the arrangement shown in Figure 7. This means that the workpiece clamp assembly 120 does not protrude off the edge 126 of the power tool base 100. The user can therefore move around the power tool base 100 more easily.

Embodiments of the present disclosure have been discussed with particular reference to the embodiments illustrated. However it will be appreciated that variations and modifications may be made to the embodiments described within the scope of the invention as defined by the claims.

## Claims

1. A power tool assembly comprising:
a base (100) having a work surface (102), the work surface (102) configured to receive a workpiece (600);
a power tool mounted on the base (100);
a fence (112) mounted to the work surface (102); and
a workpiece clamp assembly (120) moveably mountable on the work surface (102), the workpiece clamp assembly (120) having:
a moveable clamp mount (500) configured to fix the workpiece clamp assembly (120) in a plurality of different positions on the work surface (102);
a clamp arm, the clamp arm operatively engageable with the moveable clamp mount (500) and configured to move in a direction towards the fence (112);
**characterised in that** there is at least one locking pin (200; 202) moveable between a first position and a second position with respect to the moveable clamp mount (500) wherein in the first position the at least one locking pin (200; 202) is configured to fix the workpiece clamp assembly (120) to the base (100) and in the second position the at least one locking pin (200; 202) is configured to release the workpiece clamp assembly (120) from the base (100);
wherein the work surface (102) comprises a plurality of reciprocal holes (124; 128) configured to receive the at least one locking pin (200; 202) when in the first position; and
wherein the at least one locking pin (200; 202) is biased to the first position, and preferably the at least one locking pin (200; 202) is spring biased to the first position.

2. A power tool assembly according to claim 1 wherein the moveable clamp mount (500) is slidably engageable with an elongate slot ( 114) in the base (100).

3. A power tool assembly according to claim 2 wherein the moveable clamp mount (500) comprises a body portion (212) and a slot guide (214) wherein the body portion (212) is mounted on the work surface (102) and the slot guide (214) is configured to project through the slot (114).

4. A power tool assembly according to claim 3 wherein the slot guide (214) comprises a guide shoulder portion (216) facing an underside surface (318) of the base (100) opposite to the work surface (102) and configured to prevent the slot guide (214) from being removed from the slot (114).

5. A power tool assembly according to any of the preceding claims wherein the at least one locking pin (200; 202) comprises a first locking pin (200) on a first side of the moveable clamp mount (500) and a second locking pin (202) on a second side of the moveable clamp mount (500) and preferably, the first locking pin (200) is mounted on a first side of the clamp arm and the second locking pin (202) is mounted on a second side of the clamp arm.

6. A power tool assembly according any of the preceding claims wherein the at least one locking pin (200; 202) is coupled to a user actuated handle (204).

7. A power tool assembly according to any of the preceding claims wherein the at least one locking pin (200; 202) is configured to move in a different direction to the direction of movement of the clamp arm and preferably, the at least one locking pin (200; 202) is configured to move in a direction substantially perpendicular to the direction of movement of the clamp arm.

8. A power tool assembly according to any of the preceding claims wherein the clamp arm comprises a threaded portion (508) engageable with a reciprocal threaded bore (210) in the moveable clamp mount (500).

9. A power tool assembly according to any of the preceding claims wherein the clamp arm comprises a clamping plate (512) configured to clamp against the workpiece (600).

10. A power tool assembly according to claim 9 wherein the clamping plate (512) is pivotally coupled to the clamp arm.

11. A power tool assembly according to any one of claims 1 to 10 wherein the power tool is a chop saw and/or the power tool is pivotally mounted to the power tool base.

## Patentansprüche

1. Elektrowerkzeuganordnung, die Folgendes umfasst:
eine Basis (100) mit einer Arbeitsfläche (102), wobei die Arbeitsfläche (102) zum Aufnehmen eines Werkstücks (600) konfiguriert ist;
ein auf der Basis (100) montiertes Elektrowerkzeug;
einen an der Arbeitsfläche (102) montierten Anschlag (112); und
eine Werkstückklemmanordnung (120), die bewegbar auf der Arbeitsfläche (102) montierbar ist, wobei die Werkstückklemmanordnung (120) Folgendes aufweist:
eine bewegbare Klemmhalterung (500), die dazu konfiguriert ist, die Werkstückklemmanordnung (120) in einer Vielzahl unterschiedlicher Positionen auf der Arbeitsfläche (102) zu fixieren;
einen Klemmarm, wobei der Klemmarm mit der bewegbaren Klemmhalterung (500) betriebswirksam in Eingriff bringbar ist und dazu konfiguriert ist, sich in einer Richtung zu dem Anschlag (112) zu bewegen;
**dadurch gekennzeichnet, dass** mindestens ein Verriegelungsstift (200; 202) vorhanden ist, der in Bezug auf die bewegbare Klemmhalterung (500) zwischen einer ersten Position und einer zweiten Position bewegbar ist, wobei der mindestens eine Verriegelungsstift (200; 202) in der ersten Position dazu konfiguriert ist, die Werkstückklemmanordnung (120) an der Basis (100) zu fixieren, und in der zweiten Position dazu konfiguriert ist, die Werkstückklemmanordnung (120) von der Basis (100) freizugeben;
wobei die Arbeitsfläche (102) eine Vielzahl von wechselseitigen Löchern (124; 128) umfasst, die dazu konfiguriert sind, den mindestens einen Verriegelungsstift (200; 202) aufzunehmen, wenn er sich in der ersten Position befindet; und
wobei der mindestens eine Verriegelungsstift (200; 202) in die erste Position vorgespannt ist und bevorzugt der mindestens eine Verriegelungsstift (200; 202) durch eine Feder in die erste Position vorgespannt ist.

2. Elektrowerkzeuganordnung nach Anspruch 1, wobei die bewegbare Klemmhalterung (500) verschiebbar in einen Längsschlitz (114) in der Basis (100) einrückbar ist.

3. Elektrowerkzeuganordnung nach Anspruch 2, wobei die bewegbare Klemmhalterung (500) einen Körperabschnitt (212) und eine Schlitzführung (214) umfasst, wobei der Körperabschnitt (212) auf der Arbeitsfläche (102) montiert ist und die Schlitzführung (214) dazu konfiguriert ist, durch den Schlitz (114) vorzuragen.

4. Elektrowerkzeuganordnung nach Anspruch 3, wobei die Schlitzführung (214) einen Führungsschulterabschnitt (216) umfasst, der einer Unterseitenfläche (318) der Basis (100) entgegengesetzt zu der Arbeitsfläche (102) zugewandt ist und dazu konfiguriert ist zu verhindern, dass die Schlitzführung (214) aus dem Schlitz (114) entfernt wird.

5. Elektrowerkzeuganordnung nach einem der vorstehenden Ansprüche, wobei der mindestens eine Verriegelungsstift (200; 202) einen ersten Verriegelungsstift (200) an einer ersten Seite der bewegbaren Klemmhalterung (500) und einen zweiten Verriegelungsstift (202) an einer zweiten Seite der bewegbaren Klemmhalterung (500) umfasst und wobei bevorzugt der erste Verriegelungsstift (200) an einer ersten Seite des Klemmarms und der zweite Verriegelungsstift (202) an einer zweiten Seite des Klemmarms montiert ist.

6. Elektrowerkzeuganordnung nach einem der vorstehenden Ansprüche, wobei der mindestens eine Verriegelungsstift (200; 202) mit einem vom Benutzer betätigten Griff (204) gekoppelt ist.

7. Elektrowerkzeuganordnung nach einem der vorstehenden Ansprüche, wobei der mindestens eine Verriegelungsstift (200; 202) dazu konfiguriert ist, sich in einer anderen Richtung als der Bewegungsrichtung des Klemmarms zu bewegen, und wobei der mindestens eine Verriegelungsstift (200; 202) bevorzugt dazu konfiguriert ist, sich in einer Richtung zu bewegen, die im Wesentlichen senkrecht zu der Bewegungsrichtung des Klemmarms ist.

8. Elektrowerkzeuganordnung nach einem der vorstehenden Ansprüche, wobei der Klemmarm einen Gewindeabschnitt (508) umfasst, der mit einer Gegengewindebohrung (210) in der bewegbaren Klemmhalterung (500) in Eingriff bringbar ist.

9. Elektrowerkzeuganordnung nach einem der vorstehenden Ansprüche, wobei der Klemmarm eine Klemmplatte (512) umfasst, die zum Klemmen gegen das Werkstück (600) konfiguriert ist.

10. Elektrowerkzeuganordnung nach Anspruch 9, wobei die Klemmplatte (512) schwenkbar mit dem Klemmarm gekoppelt ist.

11. Elektrowerkzeuganordnung nach einem der Ansprüche 1 bis 10, wobei das Elektrowerkzeug eine Kappsäge ist und/oder das Elektrowerkzeug schwenkbar an der Elektrowerkzeugbasis montiert ist.

## Revendications

1. Ensemble outil électrique comprenant :
une base (100) présentant une surface de travail (102), la surface de travail (102) étant configurée pour recevoir une pièce à usiner (600) ;
un outil électrique monté sur la base (100) ;
un guide (112) monté sur la surface de travail (102) ; et
un ensemble de serrage de pièce à usiner (120) pouvant être monté de manière mobile sur la surface de travail (102), l'ensemble de serrage de pièce à usiner (120) présentant :
un support de serrage mobile (500) configuré pour fixer l'ensemble de serrage de pièce à usiner (120) dans une pluralité de positions différentes sur la surface de travail (102) ;
un bras de serrage, le bras de serrage pouvant venir en prise de manière opérationnelle avec le support de serrage mobile (500) et configuré pour se déplacer dans une direction vers le guide (112) ;
**caractérisé en ce qu'**il y a au moins une goupille de verrouillage (200 ; 202) mobile entre une première position et une seconde position par rapport au support de serrage mobile (500), dans lequel, dans la première position, la au moins une goupille de verrouillage (200 ; 202) est configurée pour fixer l'ensemble de serrage de pièce à usiner (120) à la base (100) et dans la seconde position, la au moins une goupille de verrouillage (200 ; 202) est configurée pour libérer l'ensemble de serrage de pièce à usiner (120) de la base (100) ;
dans lequel la surface de travail (102) comprend une pluralité de trous réciproques (124 ; 128) configurés pour recevoir au moins une goupille de verrouillage (200 ; 202) lorsqu'elle est dans la première position ; et
dans lequel la au moins une goupille de verrouillage (200 ; 202) est sollicitée vers la première position, et de préférence la au moins une goupille de verrouillage (200 ; 202) est sollicitée par ressort vers la première position.

2. Ensemble outil électrique selon la revendication 1, dans lequel le support de serrage mobile (500) peut venir en prise de manière coulissante dans une fente allongée (114) dans la base (100).

3. Ensemble outil électrique selon la revendication 2, dans lequel le support de serrage mobile (500) comprend une partie de corps (212) et un guide de fente (214), dans lequel la partie de corps (212) est montée sur la surface de travail (102) et le guide de fente (214) est configuré pour faire saillie à travers la fente (114).

4. Ensemble outil électrique selon la revendication 3, dans lequel le guide de fente (214) comprend une partie d'épaulement de guidage (216) faisant face à une surface inférieure (318) de la base (100) opposée à la surface de travail (102) et configurée pour empêcher le guide de fente (214) d'être retiré de la fente (114).

5. Ensemble outil électrique selon l'une quelconque des revendications précédentes, dans lequel la au moins une goupille de verrouillage (200 ; 202) comprend une première goupille de verrouillage (200) sur un premier côté du support de serrage mobile (500) et une seconde goupille de verrouillage (202) sur un second côté du support de serrage mobile (500) et, de préférence, la première goupille de verrouillage (200) est montée sur un premier côté du bras de serrage et la seconde goupille de verrouillage (202) est montée sur un second côté du bras de serrage.

6. Ensemble outil électrique selon l'une quelconque des revendications précédentes, dans lequel la au moins une goupille de verrouillage (200 ; 202) est couplée à une poignée actionnée par un utilisateur (204).

7. Ensemble outil électrique selon l'une quelconque des revendications précédentes, dans lequel la au moins une goupille de verrouillage (200 ; 202) est configurée pour se déplacer dans une direction différente de la direction de déplacement du bras de serrage et, de préférence, la au moins une goupille de verrouillage (200 ; 202) est configurée pour se déplacer dans une direction sensiblement perpendiculaire à la direction de déplacement du bras de serrage.

8. Ensemble outil électrique selon l'une quelconque des revendications précédentes, dans lequel le bras de serrage comprend une partie filetée (508) pouvant venir en prise avec un alésage fileté réciproque (210) dans le support de serrage mobile (500).

9. Ensemble outil électrique selon l'une quelconque des revendications précédentes, dans lequel le bras de serrage comprend une plaque de serrage (512) configurée pour se serrer contre la pièce à usiner (600).

10. Ensemble outil électrique selon la revendication 9, dans lequel la plaque de serrage (512) est couplée de manière pivotante au bras de serrage.

11. Ensemble outil électrique selon l'une quelconque des revendications 1 à 10, dans lequel l'outil électrique est une scie à tronçonner et/ou l'outil électrique est monté de manière pivotante sur la base d'outil électrique.
